Europäisches Patentamt

European Patent Office

Office européen des brevets

(19)

(11) Veröffentlichungsnummer: **0 068 342**
**B1**

(12) **EUROPÄISCHE PATENTSCHRIFT**

(45) Veröffentlichungstag der Patentschrift:
09.04.86

(51) Int. Cl.⁴: **A 22 C 11/02**

(21) Anmeldenummer: 82105337.8

(22) Anmeldetag: 18.06.82

(54) Zum gleichzeitigen Entraffen, Glätten und Bremsen einer gerafften Schlauchhülle geeignete funktionelle Einheit.

(30) Priorität: 01.07.81 DE 3125836

(43) Veröffentlichungstag der Anmeldung:
05.01.83 Patentblatt 83/1

(45) Bekanntmachung des Hinweises auf die Patenterteilung:
09.04.86 Patentblatt 86/15

(84) Benannte Vertragsstaaten:
AT BE CH DE FR GB IT LI LU NL SE

(56) Entgegenhaltungen:
DE - A - 2 402 617
DE - B - 1 177 029
FR - A - 2 350 789
US - A - 4 044 425
US - A - 4 202 075

(73) Patentinhaber: HOECHST AKTIENGESELLSCHAFT,
Postfach 80 03 20, D-6230 Frankfurt am Main 80 (DE)

(72) Erfinder: Becker, Reinhold, Dr., Am Hohen Stein 18,
D-6200 Wiesbaden (DE)
Erfinder: Petry, Dipl.-Ing., Erlenweg 1b,
D-6200 Wiebaden (DE)

LIBER, STOCKHOLM 1986

**Beschreibung**

Die Erfindung bezieht sich auf eine funktionelle Einheit von der im Oberbegriff des Anspruchs 1 genannten Art sowie auf ihre Verwendung.

Zur Verpackung von fließfähigen Nahrungsmitteln, z.B. zur Herstellung von Wurstwaren, werden bekanntlich geraffte, schlauchförmige Hüllen aus synthetischem, halbsynthetischem oder natürlichem Material verwendet. Diese Hüllen, in der Fachsprache auch als "Raupen" oder "Hohlstäbe" bezeichnet, werden aus langen Hüllen durch Raffen und längsaxiales Stauchen hergestellt, wobei die Länge der gerafften Hülle gewöhnlich nur noch 1 bis 3% der Ursprungslänge beträgt. Im allgemeinen wird z.B. zum Abfüllen der Wurstmasse zunächst eine einseitig verschlossene, geraffte schlauchförmige Hülle über das Füllrohr einer Wurstabfüllmaschine geschoben. Die Wurstmasse wird dann unter Druck durch das Füllrohr in die Hülle gepreßt, welche dadurch fortlaufend entrafft wird. Nach Erreichen einer bestimmten Länge werden zylinderförmige Würste abgebunden und verschlossen.

Der Durchmesser der erhaltenen Würste sollte aus verschiedenen Gründen über die gesammte Länge konstant bleiben. Nur ein gleichmäßiger Durchmesser, dessen Größe z.B. vom Hüllenmaterial abhängig ist, gewährleistet einen optimalen Abfüllvorgang. Auch besteht bei überfüllung die Gefahr des Aufplatzens der Wursthülle, während die Wursthülle bei zu geringer Füllung eine faltige Oberfläche zeigt.

Es wurden bereits verschiedene Vorrichtungen zum Abfüllen von Wurstmasse in geraffte, schlauchförmige Hüllen vorgeschlagen, bei denen spezielle Einrichtungen zum Entraffen, Glätten und Bremsen einen möglichst gleichmäßigen Durchmesser der gefüllten Packung erzielen sollen.

So ist eine Vorrichtung beschrieben (US-A-4,202,075), die einen die Schlauchhülle spreizenden Ringkörper aus flexiblem Material umfaßt. Auf seiner äußeren Oberfläche befinden sich Erhebungen bzw. Vertiefungen, die durch ein zweites Kalibrierteil im Innern des Ringkörpers gestreckt werden können, so daß sich dann der Umfang des Ringkörpers vergrößert. Die Schlauchhülle gleitet beim Füllvorgang mit ihrer inneren Oberfläche über die Außenfläche des Ringkörpers und wird unter Dehnen und Spreizen entrafft und geglättet, wobei mit zunehmendem Umfang des Ringkörpers die Reibung zwischen Ringkörperaußenfläche und innerer Oberfläche der Schlauchhülle vergrönert wird. Durch diese Reibung wird der Abzug der Schlauchhülle beim Füllvorgang abgebremst, wobei die Bremswirkung des Ringkörners wegen der begrenzten Dehnbarkeit des Ringkörpers allerdings gering bleibt. Deshalb ist ein zusätzliches Bremselement in der Nähe der Füllrohröffnung erforderlich, welches die durch den Ringkörper entraffte und geglättete Schlauchhülle z.B. gegen die Außenseite des Füllrohrs anpreßt.

Darüber hinaus ist eine Vorrichtung mit einer funktionellen Einheit bekannt geworden (US-A-4,044,425), die aus einem konzentrisch zum Füllrohr angebrachten ersten Ringkörper und einem äußeren zweiten Ringkörper bestent. Hierbei bildet die Außenfläche des ersten Ringkörpers zusammen mit der Innenfläche des zweiten Ringkörpers einen konisch verlaufenden Durchgang für die entrattte Schlauchhülle. Durch Veränderung der Lage des äußeren Ringkörpers läßt sich die Spannung der Schlauchhülle verändern. Bei dieser Vorrichtung wird die Schlauchhülle somit gleichzeitig von innen und von außen abgebremst, so daß das Schlauchmaterial stark mechanisch belastet wird. Zudem dürften auch Probleme auftreten, wenn der Schlauchdurchmesser dem konischen Durchgang folgend verringert werden soll.

Ausgehend von diesem Stand der Technik besteht die Aufgabe der vorliegenden Erfindung darin, eine funktionelle Einheit zu schaffen, die zum Entfälteln, Glätten und gleichzeitigen Abbremsen einer gerafften Schlauchhülle vor dem Befüllen mit einer Stopfvorrichtung geeignet ist, wobei die Schlauchhülle problemlos unter gleichzeitigem Abbremsen vom gerafften in einen einwandfreien faltenfreien Zustand übergeführt werden kann, ohne daß Gefahr besteht, daß die Schlauchhülle bei diesem Vorgang vom Bremsteil oder vom Kalibrierteil beschädigt wird. Ferner soll das Bremsteil einen ruckfreien Abzug ermöglichen, wobei die Gefahr von Abrissen der Schlauchhülle verringert ist.

Überraschenderweise wird diese Aufgabe gelöst durch die funktionelle Einheit mit den in Anspruch 1 und mit der Verwendung mit den in Anspruch 8 aufgezeigten Merkmalen. Die abhängigen Ansprüche betreffen Weiterbildungen der Vorrichtung.

Ein wesentlicher Vorteil der funktionellen Einheit nach der Erfindung liegt darin, daß die schlauchförmige Hülle unter gleichzeitigem Entraffen und Glätten von außen gegen den auf ihrer Innenseite anliegenden Ringkörper mit Ausnehmungen gedrückt wird. Hierbei erfolgt die Bremswirkung bei örtlich fixiertem Ringkörper durch die einstellbare Anpreßkraft der glättenden und bremsenden Elemente auf der Außenseite der Schlauchhülle. Die Änderung dieser Anpreßkraft, mit welcher die glättenden und bremsenden Elemente die schlauchförmige Hülle gegen den Ringkörper andrücken, und somit auch die Änderung der Bremswirkung, läßt sich auch während des Füllprozesses steuern, indem man die glättenden und bremsenden Elemente und/oder den Ringkörper längsaxial, d.h. parallel zum Füllrohr, relativ zueinander verschiebt. In einer weiteren Ausführungsform werden die glättenden und bremsenden Elemente senkrecht zur Füllrohrlängsachse in die Ausnehmungen des Ringkörpers eingedrückt. Mit zunehmender Bremswirkung wird der Abzug der Schlauchhülle beim Füllvorgang verzögert und somit das Füllkaliber der gefüllten Schlauchhülle größer.

Die schlauchförmige Hülle besteht beispielsweise aus einem üblichen zur Herstellung von Würsten verwendeten Material, wie Cellulosehydrat, Kollagen oder Kunstdarm, z.B. aus Polyamid oder Polyester, und ist gegebenenfalls faserverstärkt, insbesondere mit einer Papiereinlage. Sie zeigt gegebenenfalls auf ihrer äußeren und/oder inneren Oberfläche eine übliche Beschichtung, z.B. aus einem wasserdampf- und sauerstoffundurchlässigen Material, welche beispielsweise mit einem üblichen die Haftung verbessernden Mittel auf der Schlauchoberfläche verankert wird. Bei Verwendung einer Hülle aus Cellulosehydrat kann diese einen üblichen Wassergehalt von z.B. 6 bis 15%, aber auch einen sehr hohen Wassergehalt besitzen, z.B. bis zu etwa 35%, so daß sie vor dem Befüllen nicht gewässert werden muß. Cellulosehydrathüllen werden gewöhnlich durch Koagulation von Viskose und Regenerierung der Cellulose hergestellt und enthalten Weichmacher wie Glycerin.

Die schlauchförmige Hülle wird durch die aus dem Füllrohr austretende und in das Innere der Hülle eingepreßte fließfähige Masse vom Füllrohr abgezogen, wobei sie entrafft wird. Die Hülle gleitet hierbei mit ihrer inneren Oberfläche über die äußere Oberfläche des Ringkörpers und wird durch die auf ihrer äußeren Oberfläche einwirkenden bremsenden und glättenden Elemente in die Ausnehmungen auf der Außenfläche des Ringkörpers eingedrückt, ohne daß die Hülle im Bereich der Ausnehmungen notwendigerweise die äußere Oberfläche des Ringkörpers berührt. Es ist aber auch möglich, die Hülle bis zur Oberfläche der Ausnehmungen einzudrücken, womit eine verstärkte Bremswirkung erzielt werden kann.

Der Ringkörper hat zylindrische Form, d.h. er hat einen kreisförmigen Außenumfang mit Ausnehmungen, oder zeigt die Form eines Quaders, dessen Außenumfang im Querschnitt die Form eines Vielecks aufweist, wobei die Ecken durch die Ausnehmungen ersetzt sind. Das Vieleck ist beispielsweise drei- bis achteckig, insbesondere quadratisch, wobei durch die Ausnehmungen ein im Querschnitt kreuzförmiger Körper entstanden ist. Bei der zuletzt genannten Ausführungsform des Ringkörpers befinden sich somit am Außenumfang zwischen zwei benachbarten Ausnehmungen ebene Flächen. Der Ringkörper besitzt eine zentrale Öffnung zum Aufschieben und lösbaren Befestigen auf dem Füllrohr einer üblichen Stopfvorrichtung in der Nähe der Füllrohröffnung. Die zentrale Öffnung zeigt somit einen Durchmesser, der im wesentlichen dem äußeren Durchmesser des Füllrohres entspricht und ist im wesentlichen zylinderförmig. Vorzugsweise wird der Ringkörper nicht direkt auf dem Füllrohr, sondern auf einem das Füllrohr umgebenden und darauf verschiebbar befestigten Außenrohr angebracht. Die Stopfvorrichtung dient z.B. zum Abfüllen von Wurstmasse in schlauchförmige Hüllen. Die lösbare Befestigung des Ringkörpers bzw. des Außenrohrs am Füllrohr sowie des Ringkörpers am Außenrohr erfolgt z.B. mit einem Gewinde, Bajonettver-schluß oder über einen Schnappverschluß mit Hilfe von abrechtbaren Elementen (US-A-4,034,441), von elastischen Stegen oder eines Sicherungsringes nach DIN 471/472 neben oder in der zentralen Öffnung des Ringkörpers, die z.B. in eine Nut, Nocke oder Rille des Füllrohres einrasten.

Der Ringkörper und auch die glättenden und bremsenden Elemente sind zweckmäßigerweise relativ starr und praktisch nicht flexibel und bestehen gewöhnlich aus Metall oder Kunststoff.

Die am äußeren Umfang des Ringkörpers vorhandenen, in Schlauchfortbewegungsrichtung, d.h. parallel zur Längsachse des Füllrohres, sich erstreckenden Ausnehmungen haben die Form von Nuten, Rillen oder Einkertungen, die im Querschnitt und in Frontansicht im wesentlichen U-förmig, V-förmig oder rechteckig ausgebildet sind. Sie erstrecken sich vorzugsweise über die gesamte Länge des Ringkörpers. Neben diesen Ausnehmungen befindet sich die äußere Oberfläche des Ringkörpers; ihr größter äußerer Umfang ist kleiner als der innere Umfang der schlauchförmigen Hülle im entrafften Zustand.

Die schlauchförmige Hülle wird durch die bremsenden und glättenden Elemente, die vorzugsweise die gleiche Querschnittsform wie die Ausnehmungen des Ringkörpers besitzen, in diese Ausnehmungen eingedrückt, wodurch die Hülle, je nach Tiefe der Ausnehmungen, beliebig stark gedehnt werden kann. Im Extremfall drücken die bremsenden Elemente die Hülle gegen den Ringkörper.

Insbesondere zeigen diese Elemente kreisförmigen Querschnitt. Insbesondere sind die bremsenden und glättenden Elemente und/oder der Ringkörper entlang einer zur Längsachse des Füllrohrs parallel und im Abstand sich erstreckenden Achse relativ zueinander verschiebbar. Sie sind vorzugsweise stabförmig, wobei ihr erstes Ende, welches sich in Gegenrichtung zur Schlauchfortbewegung erstreckt, in Richtung zum Füllrohr und in Richtung zur Schlauchfortbewegung abgeschrägt ist. Zweckmäßigerweise sind die bremsenden und glättenden Elemente mit ihrem zweiten Ende, welches sich in der Nähe der Füllrohröffnung befindet, an einer Platte befestigt, welche senkrecht zur Längsachse des Füllrohrs angeordnet ist und parallel zu dieser Längsachse verschoben werden kann. Die Platte ist beispielsweise an ihrem Rand an einer Halterung befestigt. Durch Verschieben der Platte parallel zur Füllrohrlängsachse in Gegenrichtung zur Schlauchfortbewegung und/oder Verschieben des Ringkörpers parallel zur Füllrohrlängsachse in Richtung der Schlauchfortbewegung werden die bremsenden und glättenden Elemente mit ihrem abgeschrägten Ende in die Ausnehmungen des Ringkörpers eingeschoben, wobei die Schlauchhülle in die Ausnehmungen eingedrückt wird. Ferner muß die Platte eine zentrale Öffnung besitzen, durch die sich das Füllrohr und die Schlauchhülle erstreckt. Der verschiebbare Ringkörper ist beispielsweise an einem längsaxial zum Füllrohr verschiebbaren Außenrohr befestigt, wobei dann die bremsenden und glättenden Elemente vorzugsweise örtlich fixiert sind.

In einer weiteren Ausführungsform ist der Ringkörper örtlich fixiert und die bremsenden und glättenden Elemente werden in senkrechter Richtung zur Längsachse des Füllrohrs in die Ausnehmungen eingedrückt.

In einer bevorzugten Ausführungsform zeigen die Ausnehmungen des Ringkörpers an ihrer tiefsten Stelle ansteigende Flächen, die in ihrem Steigungsmaß der Abschrägung des ersten Endes der bremsenden und glättenden Elemente entsnricht.

Nach dem Ringkörper wird die Schlauchhülle unmittelbar an der Füllrohröffnung durch einen Ring eingeschnürt, so daß das aus der Füllrohröffnung austretende Wurstbrät nicht in Richtung zum Ringkörper zurückfließen kann. Anschlie-ßend folgen an sich bekannte Einrichtungen zum Ver-schließen bzw. Abbinden der Schlauchhülle, z.B. Clip-Vorrichtungen, und eine Schneidestation zum Abtrennen des gefüllten und verschlossenen Schlauchabschnitts.

Zu Beginn des Füllvorgangs wird zunächst der entraffte Raupenanfang über den Ringkörper gezogen und in der Clip-Vorrichtung verschlossen. Um das Aufbringen der Raupe auf das Füllrohr zu erleichtern, werden die bremsenden und glättenden Elemente entweder längsaxial zur Füllrohröffnung verschoben oder, falls sie an einer aus Segmenten bestehenden Platte befestigt sind, werden die Plattensegmente vom Füllrohr weggeklappt.

Durch den Druck, mit dem das pastöse Füllgut, z.B. Wurstmasse, durch das Füllrohr in den entrafften Teil der schlauchförmigen Hülle gepreßt wird, wird die Hülle fortlaufend über die äußere Oberfläche des Ringkörpers gezogen, wobei sie gleichzeitig entrafft und geglättet wird. Infolge der Reibungskräfte durch die gegenseitige Berührung von äußeren bremsenden und glättenden Elementen und Schlauch sowie Ringkörper und Schlauch wird der Abzug der Schlauchhülle abgebremst. Die Bremswirkung wird durch das Ausmaß der Dehnung des Schlauchs reguliert. Sie hängt ab von der Anpreß-raft zwischen den bremsenden und glättenden Elementen und dem Schlauch, die durch z.B. längsaxiales Verschieben dieser Elemente eingestellt wird. Man arbeitet gewöhnlich mit einer Abzugsgeschwindigkeit von 10 bis 20 m/min.

Nachdem der Schlauch vollständig gefüllt ist, werden die bremsenden ung glättenden Elemente durch z.B. längsaxiales Verschieben in Richtung zur Füllrohröffnung erneut von den Ausnehmungen des Ringkörpers entfernt und der nächste geraffte Schlauch kann auf das Füllrohr aufgebracht werden. Das Verschieben der bremsenden und glättenden Elemente bzw. des Ringkörpers kann von Hand oder durch mechanisch oder pneumatisch wirkende Einrichtungen erfolgen.

Die Erfindung wird anhand der Figuren 1 bis 4 erläutert.

Fig. 1 zeigt die Vorrichtung mit der funktionellen Einheit im Längsschnitt der Linie I-I der Fig. 2,

Fig. 2 zeigt die Vorrichtung der Fig. 1 in Frontansicht im Schnitt der Linie II-II Fig. 1,

Fig. 3 zeigt eine weiter Ausführungsform der Vorrichtung im Längsschnitt der Linie III-III der Fig. 4,

Fig. 4 zeigt die Vorrichtung der Fig. 3 in Frontansicht im Schnitt der Linie IV-IV der Fig. 3.

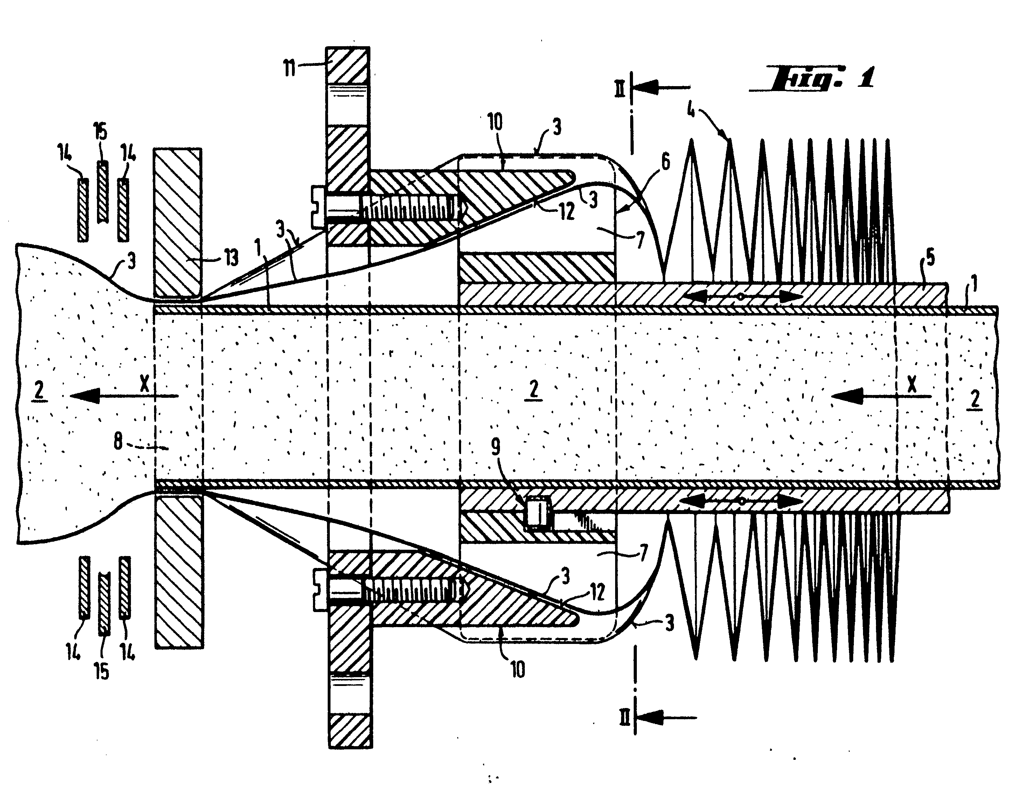

Die Vorrichtung der Fig. 1 besteht aus dem Füllrohr 1 einer Fülleinrichtung. Fließfähige Masse 2 fließt unter Druck aus der Füllrohröffnung 8 in der entrafften Teil 3 der Schlauchhülle aus. Der geraffte Teil 4 der Schlauchhülle befindet sich auf einem Außenrohr 5, welches auf der äußeren Oberfläche des Füllrohrs 1 lösbar und verschiebbar befestigt ist. Der Ringkörper 6 mit den nutenförmigen Ausnehmungen 7 auf seiner äußeren Oberfläche ist über einen Bajonettverschluß 9 mit dem Außenrohr 5 verbunden. Die glättenden Elemente 10 sind mit ihrem einen Ende an einer Platte 11 befestigt, während ihr anderes Ende eine Abschrägung 12 aufweist.

Unmittelbar neben der Füllrohröffnung 8 ist eine an sich bekannte Einrichtung in Form eines Ringes 13 angebracht, der das Zurückfließen der fließfähigen Masse 2 in Gegenrichtung zur Schlauchfortbewegung auf die Außenfläche des Fülirohres 1 durch Einschnüren der Schlauchhülle 3 verhindert.

Einrichtungen zum Verschließen der Schlauchhülle z.B. Clipvorrichtungen 14 und eine Schneidestation 15 zum Abtrennen gefüllter Schlauchabschnitte folgen nach dem Füllrohr 1 und sind nur schematisch dargestellt.

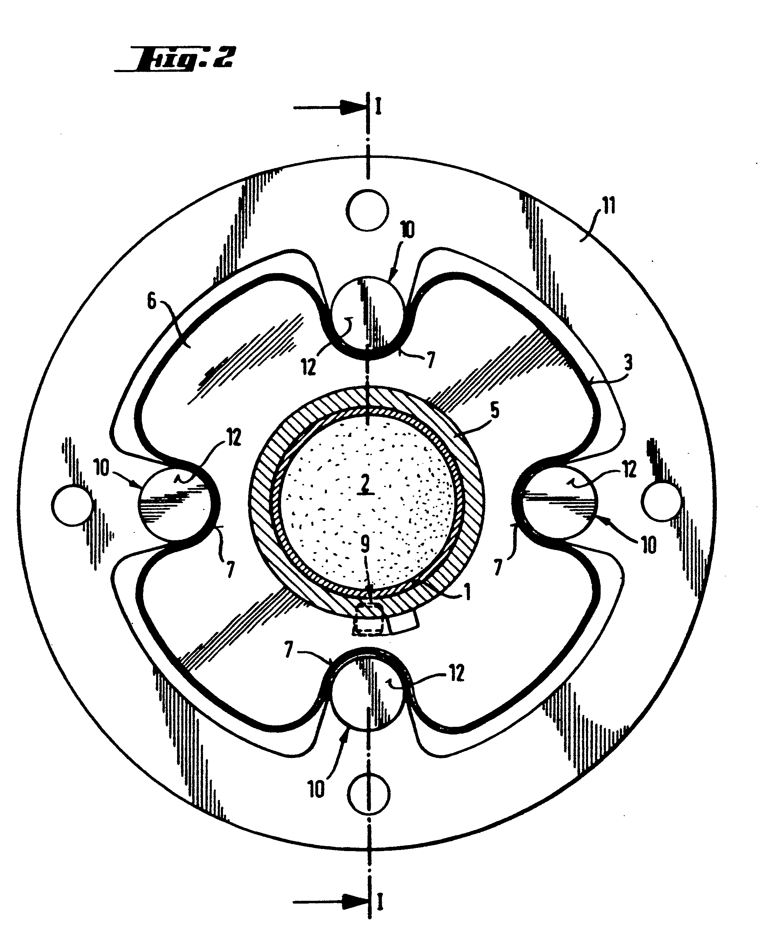

In Fig. 2 haben die Bezugsziffern die gleiche Bedeutung wie in Fig. 1.

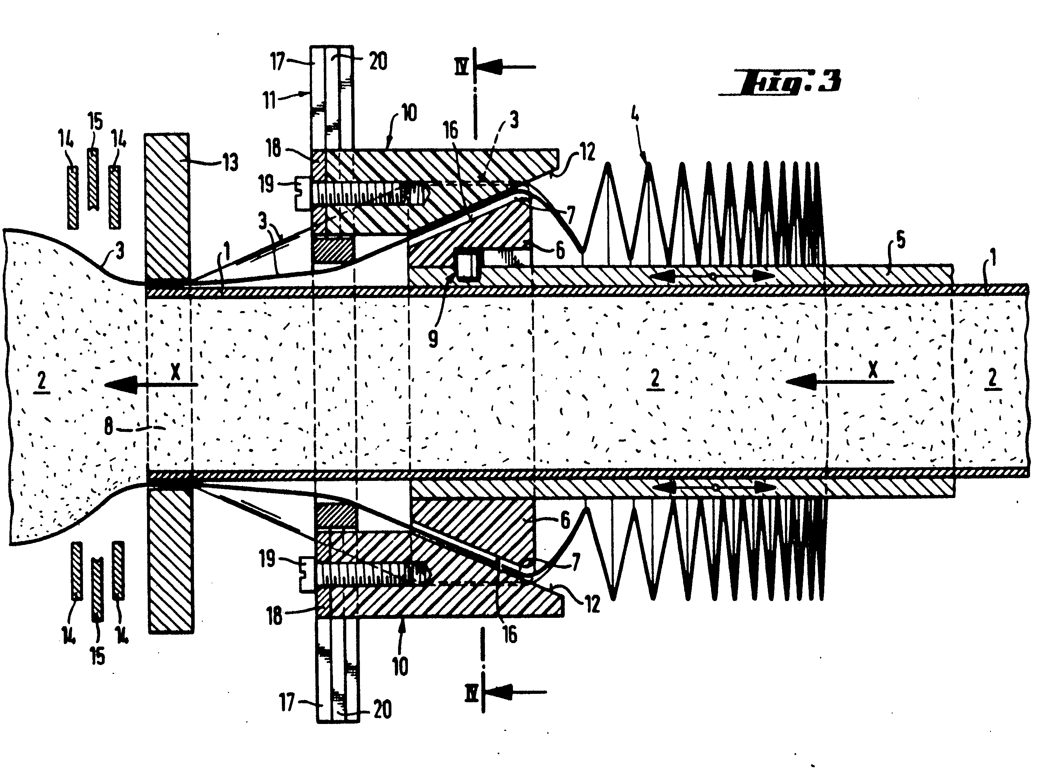

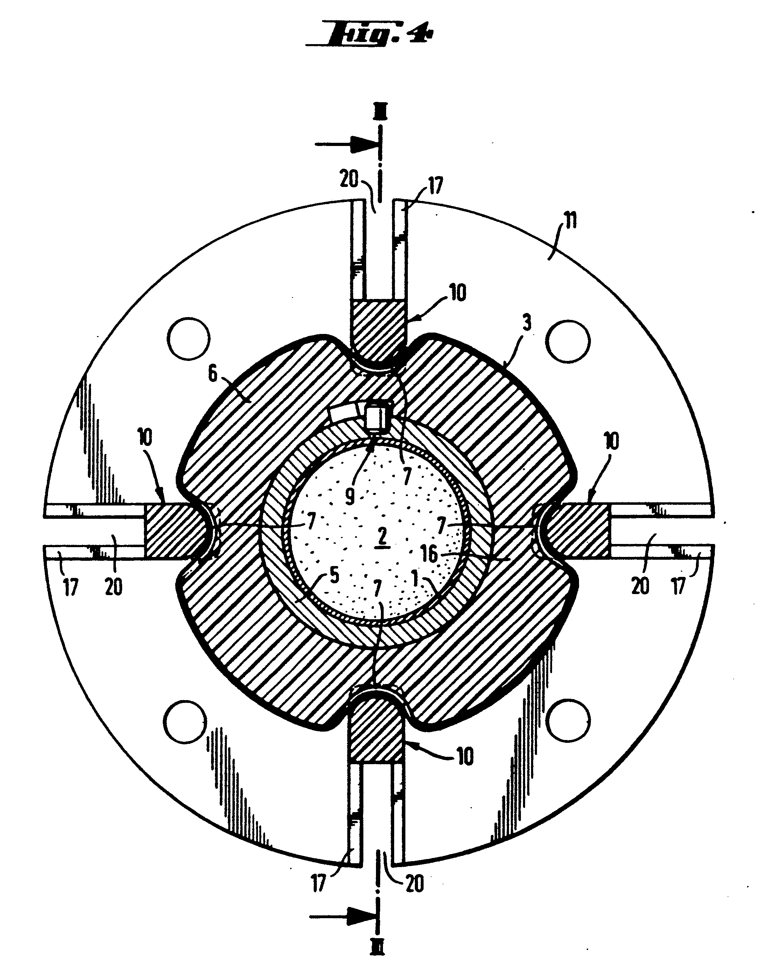

In den Fig. 3 und 4 sind funktionsgleiche Teile mit den gleichen Ziffern wie in Fig. 1 und 2 bezeichnet. Die Ausnehmungen 7 des Ringkörpers 6 besitzen, im Gegensatz zu der in Fig. 1 und 2 dargestellten Vorrichtung, eine in Gegenrichtung zur Schlauchfortbewegungsrichtung X ansteigende Fläche 16, die parallel zur Abschrägung 12 verläuft Das hintere Ende des glättenden Elements 10 läuft in einem Schlitz 20, gehalten von zwei Führungsschienen 17 und kann somit in seiner Lage senkrecht zur Füllrohr-5 längsachse verändert werden. Das Element 10 wird an der Platte 11 fixiert durch eine Halteplatte 18 und eine Schraube 19.

Es ist auch möglich, den Ringkörper 6 vor seiner Verwendung zusammen mit einer gerafften Schlauchhülle zu verpacken, wobei man ihn in einem entrafften Ende der Schlauchhülle anordnet, wie es in der US-A-4,007,761 gezeigt wird.

**Patentansprüche**

1. Funktionelle Einheit zum Entraffen, Glätten und Bremsen einer gerafften Schlauchhülle, verwendbar beim Einpressen von fließfähiger Masse (2), wie Wurstmasse, in die Schlauchhülle (3) aus dem Füllrohr (1) einer Füllvorrichtung, umfassend einen Ringkörper (6) mit einer zentralen Öffnung, geeignet zum lösbaren Befestigen auf dem Füllrohr (1), und mit einer äußeren Oberfläche, gegen welche die Schlauchhülle mit ihrer Innenseite beim Füllvorgang eng anlegbar ist, und umfassend ein glättendes und bremsendes Teil, welches geeignet ist, auf die Außenseite der Schlauchhülle im Bereich des Ringkörpers (6) einzuwirken, wobei der Ringkörper (6) und das glättende und bremsende Teil parallel zur Längsachse des Füllrohrs (1) relativ zueinander verschiebbar sind, dadurch gekennzeichnet, daß die äußere Oberfläche des Ringkörpers (6) parallel zu seiner Längsachse und im Abstand zueinander sich erstreckende Ausnehmunén (7) aufweist, welche in Frontansicht im wesentlichen U-förmigen, V-förmigen oder rechteckigen Querschnitt besitzen, daß das glättende und bremsende Teil aus glättenden und bremsenden Elementen (10) besteht, welche diesen Ausnehmungen (7) im wesentlichen entsprechen und ausschließlich im Bereich der Ausnehmungen (7) mit dem Ringkörper (6) in Eingriff bringbar sind.

2. Funktionelle Einheit nach Anspruch 1, dadurch gekennzeichnet, daß - zusätzlich oder anstelle der Relativbewegung des Ringkörpers (6) und der glättenden und bremsenden Elemente (10) parallel zur Längsachse des Füllrohrs (1)-die glättenden und bremsenden Elemente (10) senkrecht zur Längsachse des Füllrohrs (1) verschiebbar angeordnet sind.

3. Funktionelle Einheit nach Anspruch 1 oder 2, dadurch gekennzeichnet, daß die bremsenden und glättenden Elemente (10) stabförmig sind und an ihrem ersten Ende, welches sich in Gegenrichtung zur Schlauchfortbewegung (X) erstreckt, in Richtung zum Füllrohr (1) und in Richtung zur Schlauchfortbewegung sich erstreckende Abschrägungen (12) aufweisen.

4. Funktionelle Einheit nach einem der Ansprüche 1 bis 3, dadurch gekennzeichnet, daß die bremsenden und glättenden Elemente (10) stabförmig sind und an ihrem zweiten Ende, welches sich in der Nähe der Füllrohröffnung (8) befindet, an einer Platte (11) gegebenenfalls senkrecht zur Langsachse des Füllrohrs (1) verschiebbar befestigt sind, wobei die Platte (11) parallel zu dieser Längsachse verschiebbar angeordnet ist.

5. Funktionelle Einheit nach einem der Ansprüche 1 bis 4, dadurch gekennzeichnet, daß die Ausnehmungen (7) des Ringkörpers (6) an ihrer tiefsten Stelle in Gegenrichtung zur Schlauchfortbewegung (X) ansteigende Flächen (16) besitzen.

6. Funktionelle Einheit nach einem der Ansprüche 1 bis 5, dadurch gekennzeichnet, daß die äußere Oberfläche des Ringkörpers (6) einen im Querschnitt kreisförmigen Auénumfang aufweist.

7. Funktionelle Einheit nach einem der Ansprüche 1 bis 6, dadurch gekennzeichnet, daß die äußere Oberfläche des Ringkörpers (6) im Querschnitt die Form eines Vielecks aufweist, wobei sich die Ausnehmungen (7) an den Ecken des Vielecks befinden.

8. Verwendung der funktionellen Einheit nach einem der Ansprüche 1 bis 7 auf dem Füllrohr (1) einer Füllvorrichtung beim Einpressen von fließfähiger Masse (2), wie Wurstmasse, in die Schlauchhülle (3), bei welcher der entraffte Schlauchteil (3) mit seiner Innenseite eng anliegend über die äußere Oberfläche des Ringkörpers (6) gezogen wird und mit den glättenden und bremsenden Elementen (10) in die Ausnehmungen (7) des Ringkörpers (6) gepreßt wird.

**Claims**

1. Functional unit for deshirring, smoothing and braking a shirred tubular casing suited for forcing a fluid mass (2), for example, sausage meat, from the stuffing horn (1) of a stuffing device into the tubular casing (3) and comprising an annular body (6) having a central opening releasably securable to the stuffing horn (1) and an outer surface, against which the inner surface of the tubular casing (3) can be tightly pressed during the stuffing procedure; and further comprising a smoothing and braking member suited to act onto the outer surface of the tubular casing in the region of the annular body (6), with the annular body (6) and the smoothing and braking member being displaceable relative to each other along an axis parallel to the longitudinal axis of the stuffing horn (1), characterized in that the annular body (6) has recesses (7) on its outer surface, which are arranged at a distance from each other and extend parallel to the longitudinal axis of the annular body (6) and which, seen from the front, have a substantially U-shaped, V-shaped or rectangular cross-sectional configuration, that the smoothing and braking member is comprised of smoothing and braking elements (10) which have a configuration substantially corresponding to the configuration of the recesses (7), and which can be brought into, and out of, contact with the annular body (6) in the area of the recesses (7) exclusively.

2. Functional unit as claimed in Claim 1, wherein, in addition to or instead of the relative movement of the annular body (6) and the smoothing and braking elements (10) parallel to the longitudinal axis of the stuffing horn (1), the smoothing and braking elements (10) are displaceable perpendicular to the longitudinal axis of the stuffing horn (1).

3. Functional unit as claimed in Claim 1 or 2, wherein the smoothing and braking elements (10 are rod-shaped and their first end, oriented opposite the direction of movement (X) of the casing, is provided withe bevels (12) facing in the direction of the stuffing horn (1) and in the direction of movement of the tubular casing.

4. Functional unit as claimed in any of Claims 1 to 3, wherein the smoothing and braking elements (10) are rodshaped and their second ends, which are adjacent to the stuffing horn outlet (8), are fastened to a plate (11), optionally such that they can be displaced perpendicular to the longitudinal axis of the stuffing horn (1), Whereby the plate (11) is arranged displaceable parallel to the longitudinal axis of the stuffing horn.

5. Functional unit as claimed in any of Claims 1 to 4, wherein the recesses (7) in the annular body (6) have surfaces (l6) at their deepest points which slope outwardly in the direction opposite to the direction of movement of said tubular casing (X).

6. Functional unit as claimed in any of Claims 1 to 5, wherein the outer surface of the annular body (6) has a circular cross-sectional outer circumference.

7. Functional unit as claimed in any of Claims 1 to 6, wherein the outer surface of the annular body (6) has a polygonal cross-sectional configuration, with the recesses (7) being located at the corners of the polygon.

8. Use of the functional unit as claimed in any of Claims 1 to 7, on the stuffing horn (1) of a stuffing device during the forcing of a fluid mass (2), such as sausage meat, into the tubular casing (3), whereby the inner surface of the deshirred portion of the casing (3) is moved over the outer surface of the annular body (6) in close contact with the latter and is pressed into the recesses (7) of the annular body (6) by the smoothing and braking elements (10).

**Revendications**

1. Unité fonctionnelle pour déplisser, lisser et freiner une enveloppe tubulaire souple plissée, utilisable lors de l'enfoncement sous pression, hors du tube de remplissage (1)d'un dispositif de remplissage, d'une masse fluide (2), telle qu'une masse de saucisses, dans l'enveloppe tubulaire souple (3), comprenant un corps annulaire (6) présentant une ouverture centrale, adapté à la fixation amovible sur le tube de remplissage (1), et une surface extérieure contre laquelle l'enveloppe tubulaire souple peut être appliquée étroitement par sa face intérieure lors de l'opération de remplissage, et comprenant une partie lissante et freinante qui est adaptée pour agir sur la face extérieure de l'enveloppe tubulaire souple dans la zone du corps annulaire (6), le corps annulaire (6) et l'élément lissant et freinant pouvant être déplacés en translation l'un par rapport à l'autre parallélement à l'axe longitudinal du tube de remplissage (1), caractérisée en ce que la surface extérieure du corps annulaire (6) présente des cavités (7) s'étendant parallélement à son axe longitudinal et distantes l'une de l'autre et qui présentent en vue frontaleune section transversale sensiblement en forme de V, en forme de U ou rectangulaire, en ce que la partie lissante et freinante est constituée d'éléments lissants et freinants (10) qui correspondent sensiblement à ces cavités (7) et peuvent être amenés en prise avec le corps annulaire (6) exclusivement dans la zone des cavités (7).

2. Unité fonctionnelle selon la revendication 1, caracterisée en ce que -en plus ou à la place du mouvement relatif du corps annulaire (6) et des éléments lissants et freinants (10) parallélement à l'axe longitudinal du tube de remplissage (1)- les éléments lissants et freinants (10) sont disposés déplaçables en translation perpendiculairement à l'axe longitudinal du tube de remplissage (1).

3. Unité fonctionnelle selon la revendication 1 ou 2, caractérisée en ce que les éléments freinants et lissants (10) sont en forme de barre et présentent, à leur premiére extrémité qui s'étend dansle sens opposé à l'avance (X) du tube souple, des biseaux (12) qui s'étendent en direction du tube de remplissage (1) et en direction de l'avance du tube souple.

4. Unité fonctionnelle selon l'une quelconque des revendications 1 à 3, caractérisée en ce que les éléments freinants et lissants (10) sont en forme de barre et sont, à leur seconde extrémité qui se trouve au voisinage de l'ouverture (8) du tube de remplissage, fixées sur une plaque (11) de manière eventuellement deplaçable en translation perpendiculairement à l'axe longitudinal du tube de remplissage (1), la plaque (11) étant disposée deplaçable en translation parall°élément à cet axe longitudinal.

5. Unité fonctionnelle selon l'une quelconque des revendications 1 à 4, caractérisée en ce que les cavités (7) du corps annulaire (6) présentent, à leur emplacement le plus profond, des surfaces (16) s'élevant ensens inverse à l'avance (X) du tube souple.

6. Unité fonctionnelle selon l'une quelconque des revendications 1 à 5, caractérisée en ce que la surface extérieure du corps annulaire (6) présente un contour extérieur de forme circulaire en section transversale.

7. Unité fonctionnelle selon l'une quelconque des revendications 1 à 6, caractérisée en ce que la surface extérieure du corps annulaire (6) présente en section transversale la forme d'un polygone, les cavités (7) se trouvant aux sommets du polygone.

8. Utilisation de l'unité fonctionnelle selon l'une quelconque des revendications 1 à 7 sur le tube de remplissage (1) d'un dispositif de remplissage lors de l'enfoncement sous pression d'une masse fluide (2), telle qu'une masse de saucisses, dans l'enveloppe tubulaire souple (3), selon laquelle la partie de tube souple déplissée (3) se trouve tirée en s'appliquant étroitement par sa face intérieure sur la surface extérieure du corps annulaire (6) et est enfoncée, à l'aide des éléments lissants et freinants (10) dans les cavités (7) du corps annulaire (6).

Fig. 1

0 068 342

Fig. 2

Fig. 3

0 068 342

## Fig. 4